# EUROPEAN PATENT APPLICATION

(11) **EP 3 330 118 A1**
(43) Date of publication of application: **06.06.2018**
(21) Application number: 17198749.8
(22) Date of filing: 27.10.2017
(51) Int. Cl.: B60L 3/00, B60L 11/18, H01R 4/00, H02J 1/00, H02H 3/08, H02J 7/00

(54) **AN IMPROVED CHARGER FOR AN EV VEHICLE**

(30) Priority: 02.12.2016 CH 15822016
(71) Applicant: Evtec AG, 6012 Kriens-Obernau (CH)
(72) Inventor: KRAMIS, Markus, 6020 Emmenbrücke (CH); BUCHER, Roland, 6280 Hochdorf (CH)
(74) Representative: Zardi, Marco

(57) **Abstract**

It is disclosed a charger of an electric vehicle including a connector adapted to be plugged to the electric vehicle and a line for communicating with the electric vehicle. The line includes a bimetallic module (4) adapted to interrupt the communication between the charger and the vehicle, when a temperature (T) in the bimetallic module is over a predetermined threshold (Tmax).

## Description

### Field of application

The present invention relates to a charger of a EV vehicle.

More particularly, the present invention relates to a charger of the type indicated above and including wirings, adapted to be connected to an external power station and terminating to a plug, which is adapted to be plugged to a socket at the vehicle.

The present invention also relates to a method of controlling a recharge of an EV vehicle.

### Prior art

A vehicle charger includes a charger component that receives power from an external power charging station and transfers the received power to a vehicle. The charger component includes wirings connected to the external power station and a plug at the free end of the vehicle charger, which is adapted to be plugged to a socket at the vehicle.

The charger component further includes a gateway that communicates with the vehicle via a vehicle connection, receiving information from a vehicle controller and, in response to the information indicating charge complete or fault detected, ceases the transfer of power of the charger component.

The information are transmitted over a vehicle bus, i.e. a specialized internal communications network adapted to control the vehicle and interconnecting components inside it. The vehicle bus assurance message delivery, non-conflicting messages, a minimum time of delivery, redundant routing and other characteristics, and is based on a standard.

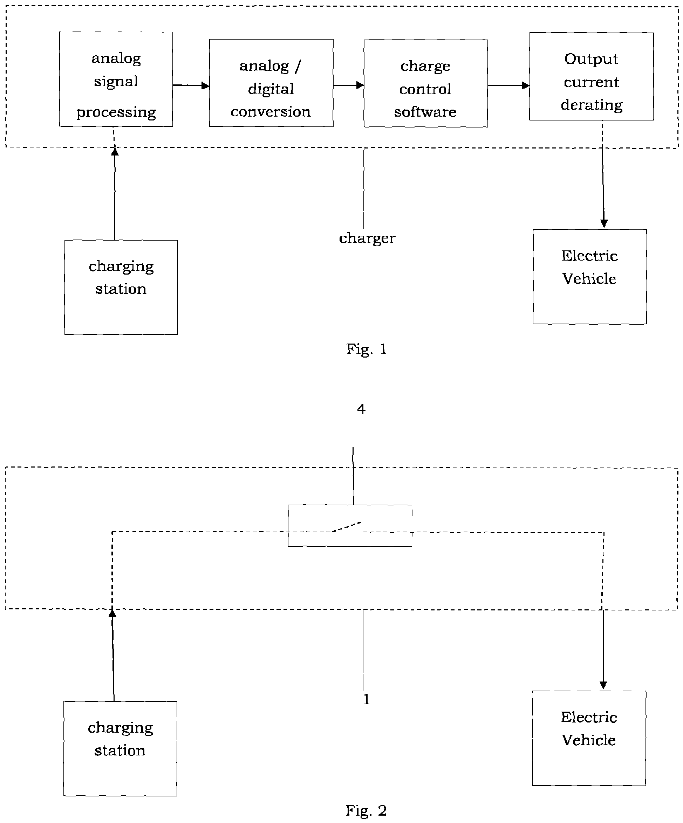

Figure 1 schematically represents in a diagram block the process of identifying this fault, through a prior art combined hardware and software control system.

The hardware component of the system includes a sensor for detecting the temperature at a predetermined position of the charger, for instance at the plug; the temperature value is processed as an analogue signal which is transmitted to a A/D converted for digital conversion. A software component of the charger receives the digital value of the temperature and compares this value with the predetermined threshold; in case the detected digital value is over the threshold, the charger executes a current derating, based on the temperature at the plug: higher is the difference between the detected temperature and the threshold, more is the current decreased, at least until a following value of temperature, detected by iterating the above mentioned process steps, is under the threshold. In case the detected temperature continues to be over the threshold value (or another threshold considered particularly dangerous), the charge is stopped.

In this prior art system, hardware components are adapted to resist at temperatures over a predetermined threshold with a safety margin. For instance, cables are over-dimensioned so as a delayed derating of current does not damage cables. Therefore, temperature over-temperature shutdown is not treated as safety relevant: the hardware components are adapted to support temperatures over the threshold for long time and the standard software procedure, including possible delays, may be executed.

In other words, the delay in derating the current due to the process of identifying the temperature fault is considered acceptable since, at the current and voltages values provided by the charging station, the charged plug and the electric cable may resist without damages at the temperature over threshold.

However, due to the increasing demand of speed charges and to the continuous increase of EVs as valid and sustainable alternative to vehicle with combustion engines, fast-charging stations providing higher currents and voltages have been recently developed.

Fast charging stations may provide voltages up to or more than 1000 V, with current up to or more than 400 A. Wirings used for such fast-charging cannot be over-dimensioned as in prior art system, and the over-temperature behaviour is more critical, and therefore shutdown is necessary to avoid damages. In addition in such operating condition, it is really dangerous to introduce a delay between detection of a temperature over the threshold and the corresponding derating. Moreover, a derating may be not sufficient to avoid damages at the plug or along the cable.

A damage at the charger plug or wirings with the above values of current is a life threatening for the user.

The problem at the base of the present invention is that of providing a system and a method to improve safety of the charger of an EV which is connected or connectable to a fast-charging station, for instance a station providing up to 1000 V and/or up to or more 400 A, the system and method being adapted to immediately react if a temperature over a predetermined threshold compromise the safety of the plug or wirings of the charger, substantially without software influence, without delay, and ultimately overcoming all the limitation currently affecting the prior art system.

### Summary of the invention

The idea at the base of the invention is to include a bimetallic module in a communication line between an electric vehicle and a charger, the bimetallic module being adapted to interrupt the communication line when a temperature in the bimetallic module is over a predetermined threshold, so as an emergency shutdown is immediately executed due to the interruption of the communication line.

The bimetallic module may be in any position of the communication line, including one of the following positions: in a cable inside which the communication line is enveloped, in a plug (connector) at which the communication line ends, at the HV+ and HV- contacts of the connection, or at any other position of the communication line inside the charger. As well, more than one bimetallic modules may be arranged in series in corresponding more than one positions of the communication line.

More particularly, according to the idea mentioned above, the line may be a communication line between the vehicle and the charging station, for instance a communication line of a CAN protocol.

However, the line may be an enabling line adapted to enable the charging station from the vehicle to transfer energy, for instance a Permission line according to the CHAdeMO protocol; in this kind of protocol, if the permission line is disconnected, the charger immediately stops the recharge.

In the following, reference is made to the communication line or the enabling line or to an handshaking line using the general term "line". However, any line or layer thereof, the disconnection of which is adapted to immediately start the execution of an emergency shutdown according to a protocol used, due to the interruption of the line, may be associated to the bimetallic module of the present invention.

Therefore, any charger including a line and a bimetallic module associated to the line, to interrupt the line when the temperature is over the threshold, falls within the scope of protection of the present invention.

The bimetallic module includes a first metal and a second metal, the first metal having a thermal expansion coefficient which is different than the thermal expansion coefficient of the second metal, and the line is interrupted by the bimetallic module, when the temperature in the module is over a predetermined threshold, due to a different expansion of the first and second metal interrupting the connection. Due to the interruption of the line, the communication between the vehicle and the charger is interrupted and the charger executes an emergency shutdown.

When the temperature in the module is under a predetermined threshold, the communication and handshake lines are not interrupted and the vehicle may communicate with the charger and receive permission to recharge.

More particularly, the vehicle charger is a charger for automobile.

The charger also includes wirings adapted to transfer electric current from the charging station to the vehicle (and/or vice versa). Such wirings and said line may be in a same support cable. Therefore, the temperature in the bimetallic module is substantially the same temperature of the wirings.

In an embodiment, the charger is fixedly connected at the station side and the connector (plug or socket) is provided only at the vehicle side (where a corresponding socket or plug is available for connection). The line and the wirings for the recharge are two separate connections inside the support cable, both terminating at the connector.

According to an aspect of the invention, the bimetallic module is between the connector and the line, preferably between the plug at the vehicle side and the line terminating to the plug at the vehicle side.

According to another aspect of the invention, the bimetallic module is inside the connector (plug), where the line (communication or handshake or enabling line) is terminated.

According to a further aspect of the invention, the bimetallic module is in the line, for instance between a first part of the line connected to the charging station (or to the connector at the charging station side) and a second part of the line connected to the connector (plug at the vehicle side). In this case, the bimetallic module is outside the connector (plug).

According to still another aspect of the invention, the first metal is a first strip connected to a first wire of the (communication or handshake or enabling) line (the wire being in the line or in the connector, according to different embodiments) and the second metal is a second strip fixed to the first strip, the two strips having a predetermined length or shape which is adapted to make contact with a second wire of (the communication or handshake or enabling) line (also the second wire being in the line or in the connector, according to different embodiments) when the temperature in the bimetallic module is under the predetermined threshold, and therefore to make the connector connected to the line.

If the temperature in the bimetallic module is over the predetermined threshold, due to the different thermal expansion coefficients of the first and the second strips, one of the two strips is expanded more than the other, so as the strips are deformed, electrically disconnecting the first and the second wire of the line, and therefore interrupting the line between the vehicle and the charger.

The bimetallic module is a bimetallic strip converting a temperature change into a mechanical displacement. The two strips may be in steel and copper or in steel and brass. The strips are joined together throughout their length by riveting, brazing or welding. The different expansions force the flat strip to bend one way if heated, and in the opposite direction if cooled below its initial temperature. The metal with the higher coefficient of thermal expansion is on the outer side of the curve when the strip is heated and on the inner side when cooled.

The sideways displacement of the strip is much larger than the small lengthways expansion in either of the two metals. Preferably, the bimetal strip is used in the flat form.

According to the idea of solution given above, the technical problem is solved by the charger of claim 1, more particularly by:
a charger of an electric vehicle including a connector (plug or socket), adapted to be plugged to the electric vehicle, and a line, terminating in the connector, for communicating with the electric vehicle, characterized by the fact that the line includes a bimetallic module adapted to interrupt the communication between the charger and the vehicle, when a temperature (T) in the bimetallic module is over a predetermined threshold (Tmax).

The line for communicating with the electric vehicle is a communication line or a handshake line or an enabling line.

Further advantages of the system and method of the present invention will be apparent with the description of specific embodiments thereof, given here below with reference to the annexed drawings just for exemplificative purpose and without limiting the scope of protection of the present invention.

### Brief description of the drawings

Fig. 1 is a diagram block schematically representing the system to control the recharge of an electric vehicle according to the prior art.
Fig. 2 is a diagram block schematically representing the charger to recharge an electric vehicle according to the method of the present invention.
Fig. 3 is another block diagram block schematically representing the charger to recharge an electric vehicle according to the method of the present invention.
Fig. 4 is a schematic representation of a portion of the charger of figure 2.
Fig. 5 schematically represents the bimetallic module according to an embodiment of the charger of the present invention.
Fig. 6 is a circuit implementing the charger, according to an embodiment of the present invention.
Fig. 7 schematically represents a bimetallic module according to the present invention, in a permission line of a communication system based on CHAdeMO protocol.
Fig. 8 schematically represents a bimetallic module according to the present invention, in a communication line of a system based on IEC 61851.

### Detailed description

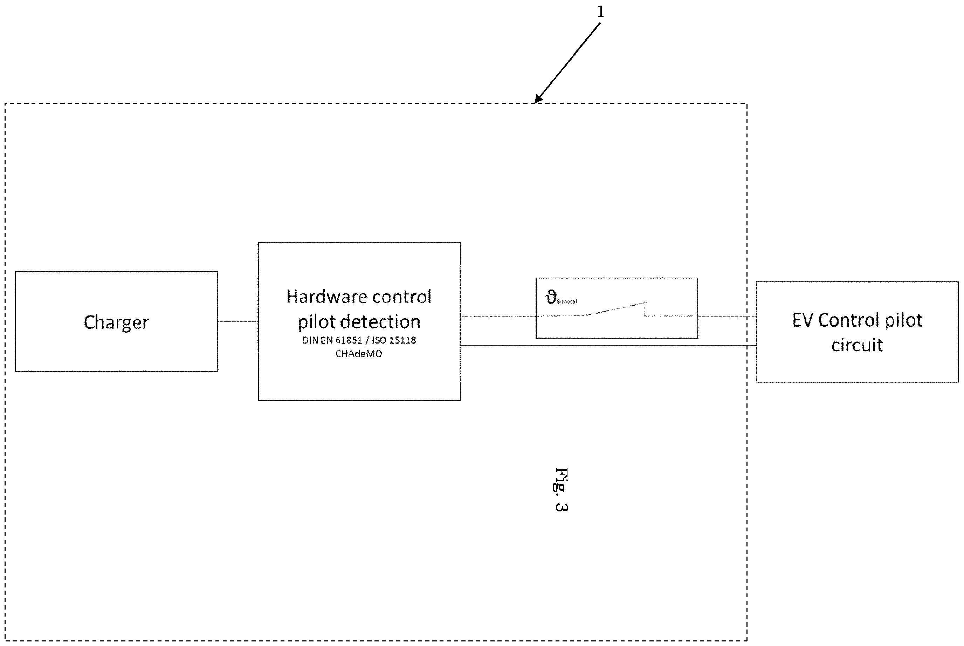

With reference to figure 2 and 3, a vehicle charger according to the present invention is schematically represented and indicated with reference number 1.

The vehicle charger 1 includes a line 5 for communicating with the vehicle, in particular for communicating with an automobile.

In the following description, the term "line" 5 relates to any kind of line which is adapted to support a communication with the vehicle, according to any one of the standard protocol used to implement electric vehicle recharges. For instance, and without limitations, the line 5 may be a communication line between the vehicle and the charging station, when a CAN protocol is implemented by the charger. Similarly, the line may be an enabling line 5 adapted to enable the charging station from the vehicle to transfer energy, when the CHAdeMO protocol is implemented by the charger.

Therefore, in the following, reference is made to the term "line" 5, this term encompassing communication lines or enabling lines or handshaking lines and any other lines or layer thereof which is available, according to a standard protocol implemented by the charger, to communicate with the electric vehicle or to send a permission signal for enabling or disabling the recharge.

The charger 1 includes a connector 2, for instance a plug to be connected to a socket at the electric vehicle. The charger also includes wirings adapted to transfer electric current from a charging station to the vehicle (and/or vice versa). Such wirings and the line of communication may be in a same support cable.

The vehicle charger 1 may include a gateway that is adapted to communicate with the vehicle via a vehicle connection, for instance receiving controller area network (CAN) information from a vehicle controller and, in response to the CAN information indicating charge complete or fault detected, ceases the transfer of power of the charger component. The gateway and the vehicle may communicate using different protocols, including one of the following: Power Line Communication (PLC), Control Pilot (IEC 61851), CHAdeMO Protocol, Local Interconnect Network (LIN), AFDX, ARINC 429, ARINC 825, SAE J1939, NMEA 2000, FMS, Factory Instrumentation Protocol, FlexRay, IEBus, J1587, J1708, Keyword Protocol 2000, Unified Diagnostic Services, MOST, VAN. The scope of protection of the present invention is not limited to the use of one specific protocol and, to the contrary, the charger and the method according to the invention may be used with any protocol, as it will be apparent from the following description.

One of the fault detected when energy is transferred, is a temperature value Ts over a predetermined threshold Tmax which is considered dangerous for continuing the recharging.

The process of identifying this fault includes detecting the temperature at a predetermined position of the charger 1 through a sensor, for instance at the plug, according to well-known and standard procedures, based on the above mentioned protocols; the temperature value is for example processed as an analogue signal which is transmitted to a A/D converted for digital conversion. A software component of the charger receives the digital value of the temperature and compares this value with the predetermined threshold; in case the detected digital value is over the threshold, the charger executes a current derating, based on the temperature at the plug. In case the detected temperature continues to be over the threshold value (or another threshold considered particularly dangerous), the charge may be stopped. The gateway for communicating with the vehicle, for instance through controller area network (CAN) information, may be inside the charger 1.

According to the present invention, the charger 1 includes a bimetallic module 4 adapted to interrupt the line 5 when a temperature t in the bimetallic module 4 is over a predetermined threshold Tmax. The predetermined threshold may be the same threshold controlled by the gateway (if the gateway is implemented in the charger) or a different threshold temperature, for instance a lower TmaxL or a higher temperature TmaxH.

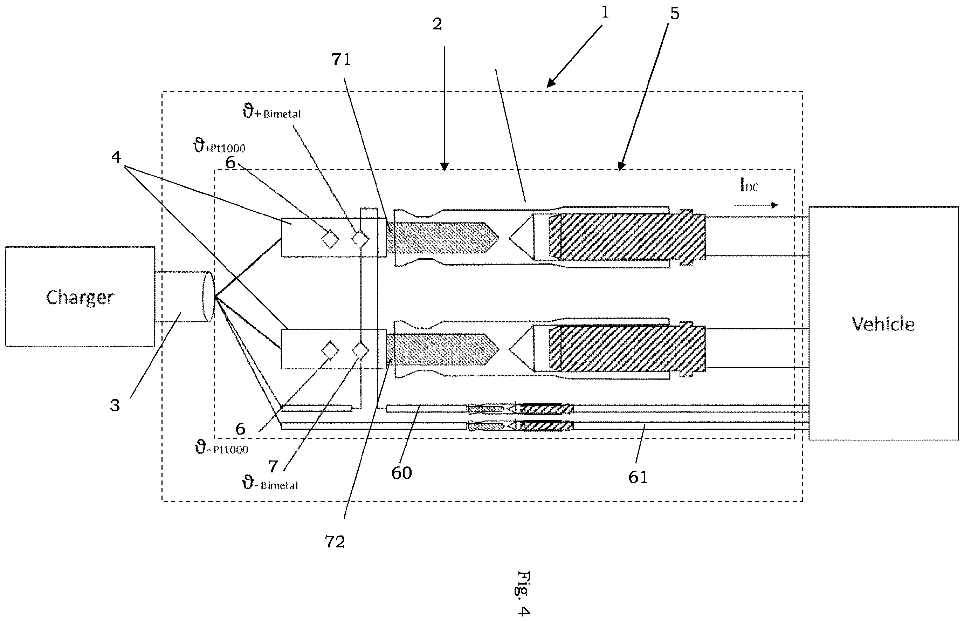

In figure 4, the bimetallic module 4 is represented in a magnified view inside the connector 2, where a portion of the line 5 is arranged to terminate at the socket of the vehicle, when the socket is connected to the connector 2. According to different embodiments of the invention (not represented), the bimetallic module 4 may be outside the connector 2, for instance inside a section of the support cable 3 where another portion of the line 5 pass.

As represented in figure 4, a positive wire 71 and a negative wire 72 (the big cables) draw the current to the vehicle. Wire 71 is for HV+ (high voltage plus pole) and wire 72 is for HV- (high voltage minus pole).

The line 5 includes communication lines 60, 61. A signal line 60 electrically embeds two bimetallic module 4. The bimetallic modules 4 are thermally linked to the positive wire 71 and negative wire 72.

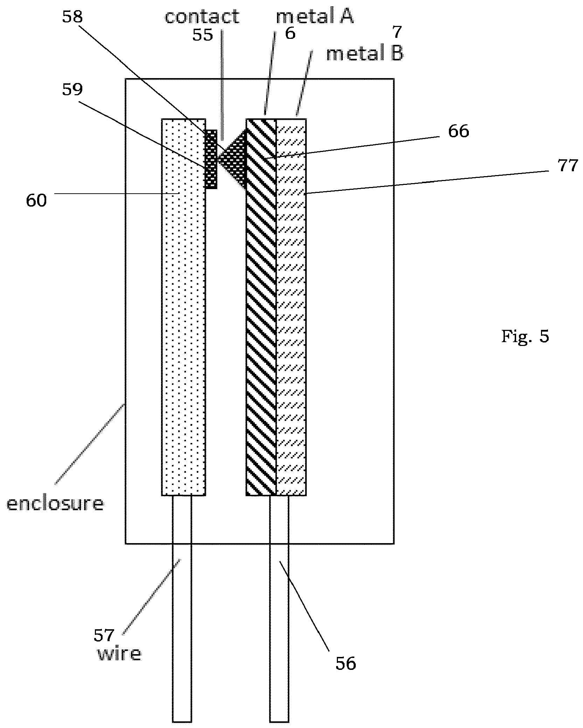

More particularly, the bimetallic module 4 includes a first metal 6 and a second metal 7, as for example represented in figures 4 and 5, the first and second metal having two different thermal expansion coefficients.

Preferably, the first metal 6 and a second metal 7 are in the form of two strips 66, 77 connected together, wherein said interruption of the line 5 is due to a bending of the two strips 66, 77.

According to one embodiment of the invention, which is represented in figure 5, when the temperature (T) in the bimetallic module is under the predetermined threshold (tmax), one end of the strips 66, 77, is connected to a section 56 of said line 5 and another end of the strips 66, 77 is connected to another section 57 of said line 5 , preferably through a contact portion 55. More preferably, the contact portion 55 includes a first pad 58 on one of the strips and a second pads 59 on a rigid plate 60 of the section 57.

To the contrary, when the temperature (T) in the bimetallic module is over the predetermined threshold, one end of the strips 66, 77 is disconnected from the section 57 of said the line 5, so as the charger or the charging station can no more communicate with the vehicle. In the embodiment of figure 5, the disconnection is due to a disconnection of the pads 58, 59.

Since the handshake line between the charger and the vehicle is interrupted, the hardware enable signal is stopped and therefore the recharge is immediately interrupted. According to the standard procedures as mentioned above, when the handshake is interrupted, also the transfer of electric energy must be immediately interrupted. Therefore, an interruption of the handshake line due to a change in bimetallic module has the direct consequence of immediately interrupting the recharge of the electric vehicle (or transfer of energy from the vehicle to the station), and implement a simple but really fast safety mechanism.

According to the present invention, also a method to recharge an electric vehicle including a control adapted to immediately stop the recharge when a threshold temperature is reached is disclosed, the control being based on a fully hardware component, i.e. the bimetallic module, which does not require any software processing or data communication to stop the recharge in addition to the hardware and software already available and implemented by the standard protocol.

The method provides connecting a connector 2 of a charger 1 to the electric vehicle, the charger including a communication line 5 for communicating with the vehicle, wherein the method is characterized by interrupting the handshake line when a temperature (t) in the bimetallic module of the charger is over a predetermined threshold (tmax).

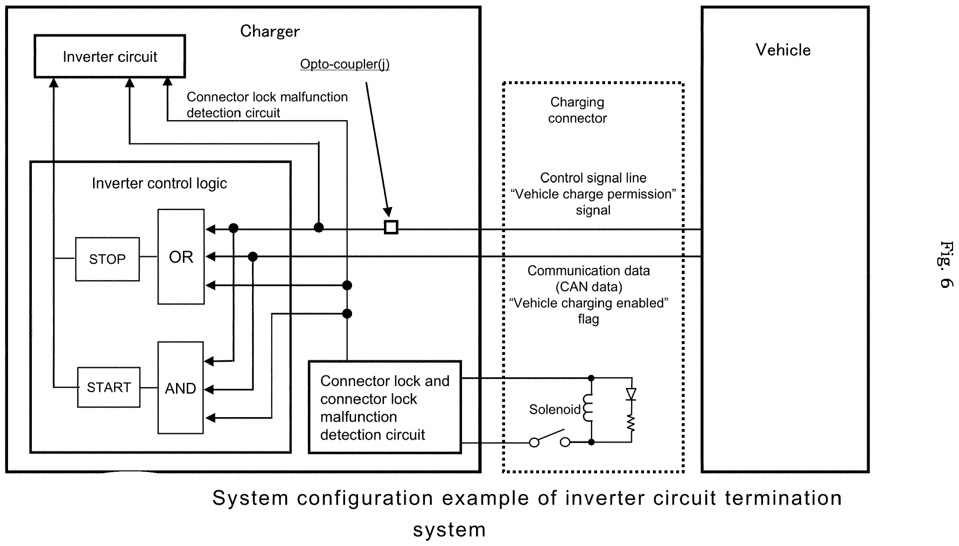

Figure 6 schematically represents a circuit termination system of a charger according to the present invention.

For instance, according to the example of figure 5, the vehicle may communicate CAN data to the charger through a communication data line (represented in a dashed rectangle), including a "vehicle charging enabled flag"; the vehicle also communicates a "vehicle charge permission signal" through a communication signal line, which is schematically indicated with an arrow starting from the vehicle and ending to the charger, at the top of the dashed rectangles, these two lines and the corresponding communications being implemented according to a standard protocol for communication.

According to the present invention, the communication signal line at the top of the dashed rectangle may be taken as a "communication line" within which including the bimetallic module. When the temperature in the bimetallic module is over the threshold, the communication signal line is immediately interrupted and the "vehicle charge permission signal" can no more be transmitted from the vehicle to the charger. As a consequence, the charged immediately stops to transfer energy. The time involved for stopping the transfer of energy as a consequence of the interruption of the communication line is much more less than the time required to implement the derating procedure.

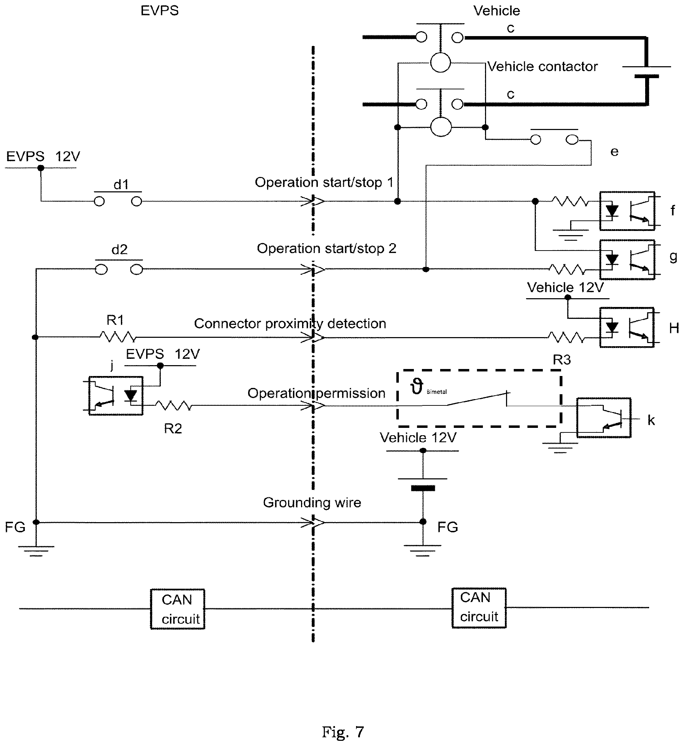

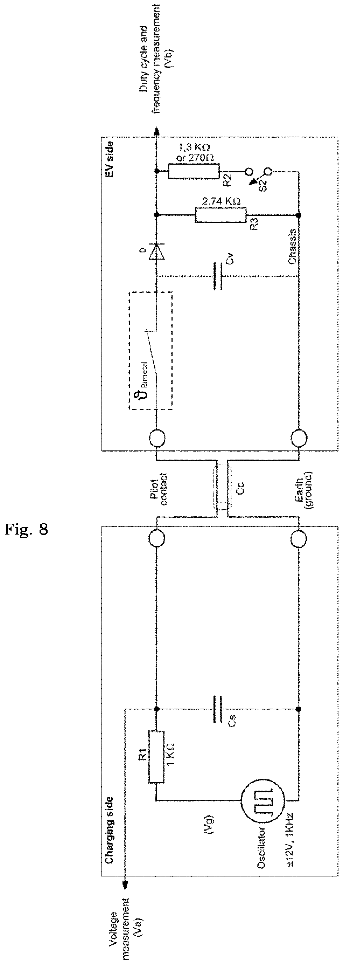

Figure 7 schematically represents a bimetallic module of a charger according to the present invention, in a permission line of a communication system based on CHAdeMO protocol. Figure 8 schematically represents a bimetallic module of a charger according to the present invention, in a communication line of a system based on IEC 61851.

Advantageously, in all the embodiment and independently in the protocol implemented by the charger, the system and method according to the present inventions solves the problem of the prior art systems since no delay is introduced before taking a countermeasure to a high temperature in the charger; indeed, the connection is immediately interrupted by the bimetallic module and no derating is required after a process of identifying the temperature fault.

The charger and method of recharging according to present invention are particularly advantageous and safe with fast-charging stations providing high currents and voltages, for instance voltages up to or more than 1000 V, with current up to or more than 400 A. The charger is adapted to improve safety and to avoid damages at the connector or along the cable, therefore preventing life threatening for the user.

## Claims

1. Charger (1) of an electric vehicle including a connector (2), adapted to be plugged to the electric vehicle, and a line (5), terminating in the connector, for communicating with the electric vehicle, **characterized by** the fact that the line (5) includes a bimetallic module (4) adapted to interrupt the communication between the charger and the vehicle, when a temperature (T) in the bimetallic module is over a predetermined threshold (Tmax).

2. Charger (1) of claim 1 wherein the line (5) for communicating with the electric vehicle is a communication line or a handshake line or an enabling line.

3. Charger (1) of claim 1 wherein the line (5) is a communication line based on a CAN protocol or a handshake line based on a CHAdeMO protocol.

4. Charger (1) of claim 1 wherein the bimetallic module (4) is embedded in the connector (2).

5. Charger (1) of claim 1 wherein the bimetallic module (4) is embedded in the line (5) outside the connector (2).

6. Charger (1) of claim 1 wherein the bimetallic module (4) includes a first and a second metal, the first and second metal having two different thermal expansion coefficients.

7. Charger (1) of claim 6 wherein the first and a second metal are in the form of two strips connected together, wherein said interruption of the line (5) is due to a bending of the two strips.

8. Charger (1) of claim 7 wherein one end of at least one of the strips is connected to a section of said line (5) and another end of at least one of the strips is connected to another section of said line (5), when the temperature (T) in the bimetallic module is under the predetermined threshold (tmax), or disconnected from said another section, when the temperature (T) in the bimetallic module is over the predetermined threshold.

9. Charger (1) of claim 1 including at least two separate bimetallic modules, a first bimetallic module is between a first and second section of the line and a second bimetallic module is between a third and a fourth section of the line.

10. Charger (1) of claim 9 wherein the metals of the first and second bimetallic modules are different.

11. Charger (1) of claim 10 wherein the first bimetallic module is more approximate to the connector and is formed by a first and a second metals different from a third and fourth metals of the second bimetallic module, which is more approximate to the charging station.

12. Charger (1) of claim 1 adapted to recharge an automobile.

13. Method to recharge an electric vehicle including: connecting a connector (2) of a charger to the electric vehicle, wherein the charger includes a line for communicating with the electric vehicle, **characterized by** interrupting the line of communication when a temperature (T) in a bimetallic module of the charger is over a predetermined threshold (Tmax).
